# EUROPEAN PATENT APPLICATION

(11) **EP 0 572 251 A1**
(43) Date of publication of application: **01.12.1993**
(21) Application number: 93304115.4
(22) Date of filing: 27.05.1993
(51) Int. Cl.: F16L 13/14

(54) **Tube connectors**

(30) Priority: 27.05.1992 GB 9211210
(71) Applicant: GOODRIDGE (UK) LIMITED, Exeter, EX5 2UP (GB)
(72) Inventor: Collings, Brian George, Sidmouth, Devon EX10 8BC (GB)
(74) Representative: Stuart, Ian Alexander

(57) **Abstract**

A desired tube connector is produced by connecting one of a range of simple tube portions (12) to an end connector element which has a bore with a narrow region (16) and a wide region (24) (preferably an annular channel). The connector element is located over an end region of a tube portion, which is then locally expanded in the region of the wide part of the connector element's bore to couple them together, optionally swivellably.

## Description

The present invention relates to tube connectors, particularly hose fittings, and especially to swivellable connections.

A typical tube connector is a length of tubing (which may incorporate a bend or radius), with a connector device at one or both ends. For example, at one end there could be a connector for connection to a tap or other fluid source, while at the other end, there is a connector for connecting to a hose pipe. When such a unit is required to be swivellable and capable of use in stringent conditions (e.g. high pressure and/or with corrosive media), the constraints are quite severe. A consequence is that such units have been expensive to produce. Typically, the tubular component has had to be turned out of solid metal, and then bent as required. A connector has then been fitted at one end by pinning. Since the pin has to pass partly through the thickness of the tube, this has meant that turned tubes have been necessary since, with ordinary extruded pipe, this would reduce the strength too much. Another approach has been to braze connectors onto the ends of the tube. This is a relatively expensive operation, and also tends to lead to an unattractive finish. Both these approaches mean that a complete unit has to be made in a relatively elaborate manufacturing process. Thus all different combinations of tube and connector that may be required have to be manufactured centrally. Thus if a large range of possibilities is to be offered to customers, very large stocks are required.

In its broadest aspect, the present invention concerns a method of forming a tube connector by mounting a connector element over an end region of a tube, wherein the connector element has an internal bore with a widened region; and the tube is passed into the bore and then widened so as to bulge into the widened region of the connector element. Thus a reliable connection is formed. It can easily be arranged that the connection is swivellable. The deformation of the tube can be a simple matter, particularly if the tube is of readily deformable material, such as malleable aluminium.

In another aspect the invention provides a kit of parts for forming tube connectors, comprising a plurality of tubes of different shapes, a plurality of connector elements each having a bore with an internal widening; and means for forming a widening on a tube region extending in the bore of a connector element to connect the tube to the connector element.

In a third aspect the invention provides a tube connector having a tube connected to at least one connector element by means of a bulge of the tube received in a widening of a bore of the connector element.

Some embodiments of the invention will now be described by way of example with reference to the accompanying drawings in which:
Fig. 1 is a view, partly in section, of a swept tube swivel assembly;
Fig. 2 is a similar view of a forged swivel assembly;
Fig. 3 is a like view of a re-useable forged swivel assembly;
Fig. 4 is a view similar to Fig. 2, incorporating a tube with a 180° bend; and
Fig. 5a, b, c and d show a range of forms of tube.

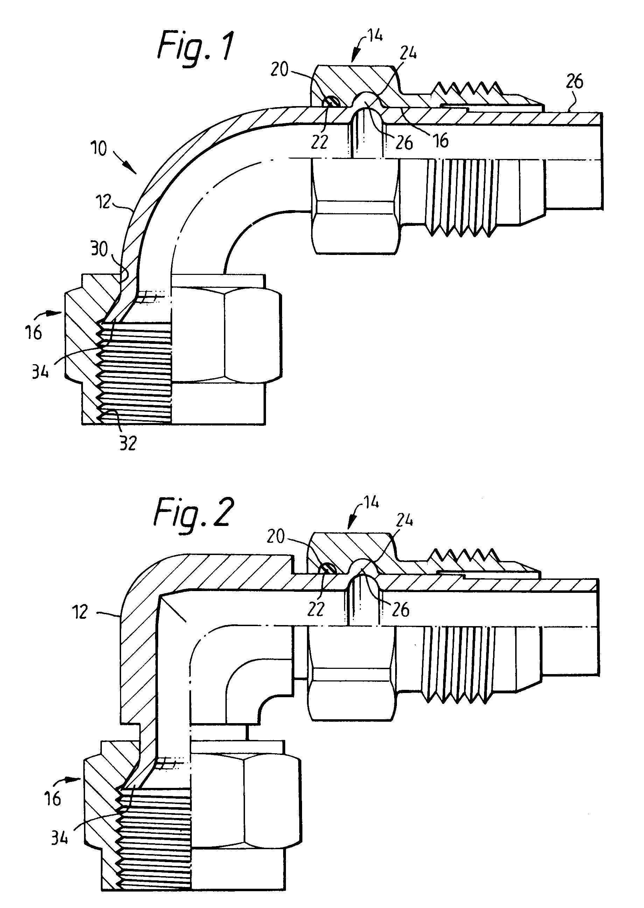

Fig. 1 shows a swept tube swivel assembly 10 composed of a length of aluminium tube 12 that extends around a 90° arc and has, at each end region, a respective connector 14,16. One of these is a hose connector 14 which is a tubular metal fitting having a main bore 16 and an enlarged bore 18 in the outer portion (extending generally away from the tube 12). In the main bore portion 16, there are two annular cavities: a small cavity 20 adjacent the inner end, and which houses an O-ring 22; and a larger cavity 24. The tube 12 extends through the connector 14 and projects slightly beyond it. Its end portion has been machined to produce an outer portion 26 of reduced diameter so that there is a hose receiving space between that portion 26 and the enlarged bore portion 18 of the connector 14.

During manufacture, the O-ring 22 was mounted in the inner cavity 20. Then the tube 12 was passed into the connector 14, and then the tube 12 was deformed in the region of the larger annular cavity 24 to produce a corresponding bead portion 26 that extends into the cavity 24. The lead portion locks the connector 14 onto the tube 12. The bead 26 can have been produced by means of a swaging tool, passed in through the outer end of the tube 12. A suitable form of swaging tool is described in GB-A-1,075,592. This has a tubular body with a transverse hole, and a mandrel that extends within the tubular body and has a cam groove arranged to register with the hole. There is a hardened metal ball in the hole, and the arrangement is such that rotation of the mandrel within the body urges the ball to project from the hole. Thus if such a tool has a body dimensioned to fit closely within the tube 12, then if the tool is rotated within the tube while the ball is urged to project, the ball will tend to form the bead 26. (GB-A-1,075,592 in fact describes a tool in which the body portion and the mandrel are stepped, and there are two transverse holes and balls, so that the tool is usable with pipes of two different internal diameters.)

Reverting to Fig. 1, the other connector 16 is a simpler fitting. It also has a tubular body. There is a relatively narrow mouth region 30 through which the tube extends, and this flares outwardly, leading to a threaded main bore portion 32. The tube 12 has been given a corresponding flare 34 by which it is retained, swivellably, in the connector 16.

Fig. 2 shows a forged swivel assembly in which the tube 12 is of somewhat more elaborate form. However, once again it has an end portion that has been passed through a first connector 14 that carries an O-ring 22 in a first groove 20, and a larger groove 24. Thereafter the connector 14 was swivellably connected to the tube 12 by deforming the tube to form a bead 26. At the other end, the tube 12 has a connector 16 connected by means of a simple flare 34 just as previously described.

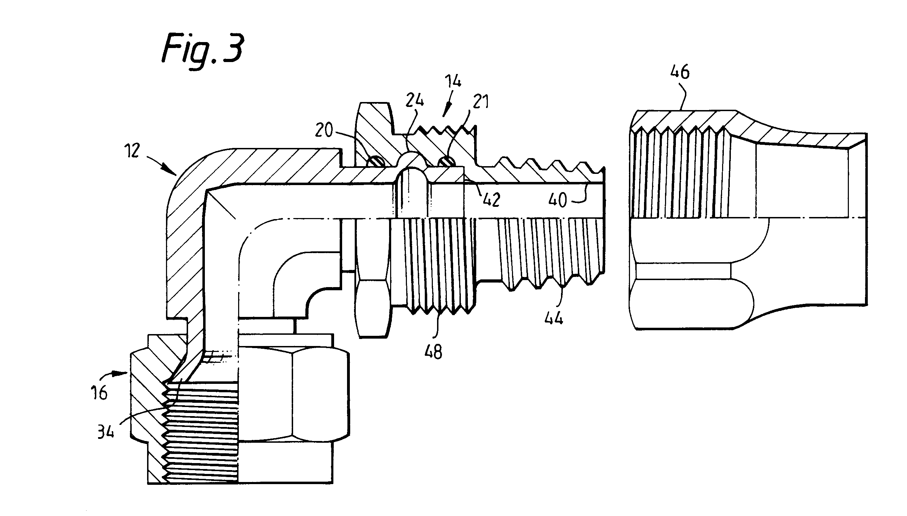

Fig. 3 is quite similar to Fig. 2. The main connector 14 has a main bore in which there are two O-ring receiving cavities 20,21, one on each side of the main cavity 24. Adjacent the main bore, there is a step down to a smaller bore portion 40. The step 42 provides an abutment for the end of the tube 12. Externally of the small bore portion 40, there is a ribbed or threaded external surface 44 for passage into a hose. A screw fitting 46 is engageable on the connector body 14, where it engages an external thread 48. At the other end of the tube 12, there is once again the simple connector 16 to which the tube is secured by means of a flare 34.

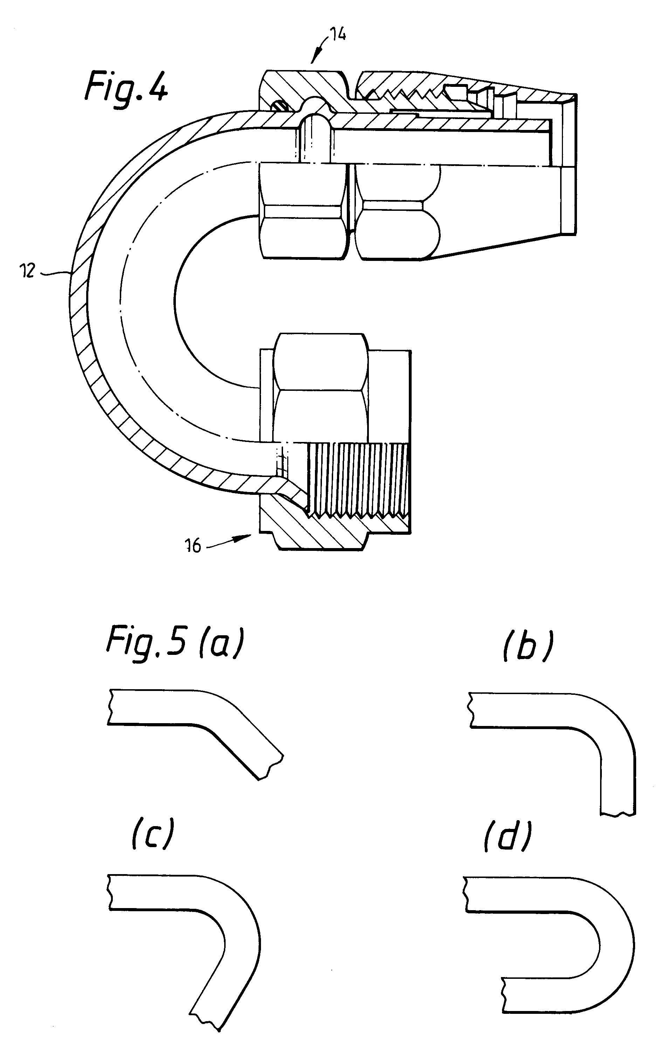

Fig. 4 shows a tube 12 with a pair of connectors 14,16, substantially the same as those shown in Fig. 2. The main difference is that the tube 12 has a 180° bend. This illustrates the fact that it is possible to stock the connector units 14,16 and a range of simple (and therefore cheap) tubes 12. Components can then be coupled together as required, to meet a customer's requirements.

Fig. 5 shows, by way of example, a number of tube shapes that are readily available.

## Claims

**1.** A method of producing a tube connector (10) by connecting a connector element (14) to an end region of a tube portion (12), wherein the connector element has a tubular portion having a bore (16,24) with a relatively wide region (24) and a relatively narrow region (16); and the connector element is located over the tube portion (12) so that the tube portion extends within both the relatively wide and the relatively narrow regions of the bore; whereafter the tube portion is locally expanded in the region of the wide bore region to produce a localised enlargement (26) of the tube portion which is incapable of passage through the narrow region (16) of the bore of the connector element.

**2.** A method according to claim 1 wherein the relatively wide region of the bore of the connector element is an annular channel (24), and the local expansion of the tube portion is arranged to produce an annular bead (26) which projects into the annular channel.

**3.** A method according to claim 2 wherein the local expansion of the tube portion is controlled to produce an enlargement which is not locked into the bore but permits relative swivelling of the connector element and the tube portion.

**4.** A method according to claim 1, 2 or 3 wherein the bore of the connector element has a sealing annular channel (20) in addition to said relatively wide region (24); and sealing means (22) are located in said sealing annular channel so as to project radially inwardly and sealingly engage the tube portion (12) as the connector element is located over the tube portion.

**5.** A method according to any preceding claim wherein the local expansion of the tube portion is effected by passing a radially expandable swaging tool into the tube portion, and rotating the tool relative to the tube portion while urging radial expansion of the tool.

**6.** A method according to claim 5 wherein the tool has a swaging head and a shaft extending axially therefrom, the head having a radial bore and a swaging element which is urgeable outwardly along the bore to project radially to an increasing extent.

**7.** A method according to claim 6 wherein the swaging element is a ball bearing; and the shaft is rotatable relative to the head to a limited extent and bears a cam surface adjacent the radial bore for contacting the ball bearing, so that rotating the shaft in one sense causes the ball bearing to be urged outwardly.

**8.** A kit of parts for providing tube connectors comprising at least one connector element (14) having a tubular portion having a bore with a relatively wide region (24) and a relatively narrow region (16); a plurality of different tube portions (12) each having an end portion over which the connector element is locatable so that the tube portion extends within both the relatively wide and the relatively narrow regions of the bore; and means for effecting local expansion of the tube portion when the connector is located over it, to produce a localised enlargement (26) of the tube portion in the region of the wide bore region, which enlargement is incapable of passage through the narrow region of the bore of the connector element.

**10.** A tube connector (10) comprising a connector element (14) mounted on an end region of a tube portion (12), wherein the connector element has a tubular portion having a bore with a relatively wide region (24) and a relatively narrow region (16); and the connector element is located over the tube portion (12) so that the tube portion extends within both the relatively wide and the relatively narrow regions of the bore and the tube portion has been locally expanded in the region of the wide bore region to produce a localised enlargement (26) of the tube portion which is incapable of passage through the narrow region of the bore of the connector element; said wide region of the bore being an annular channel (24) and said localised enlargement of the tube portion being an annular bead (26) which projects into the annular channel.
